# EUROPÄISCHE PATENTSCHRIFT

(11) **EP 1 493 631 B1**
(45) Veröffentlichungstag und Bekanntmachung des Hinweises auf die Patenterteilung: **30.01.2008**
(21) Anmeldenummer: 04102179.1
(22) Anmeldetag: 18.05.2004
(51) Int. Cl.: B60R 16/02, B60K 31/00, G08G 1/16

(54) **Fahrerassistenzverfahren und -vorrichtung für ein Kraftfahrzeug**
Driver assistance system and method for a vehicle
Dispositif et méthode d'assistance pour conducteur de véhicule

(30) Priorität: 04.07.2003 DE 10330255
(43) Veröffentlichungstag der Anmeldung: 05.01.2005
(73) Patentinhaber: ROBERT BOSCH GMBH, 70442 Stuttgart (DE)
(72) Erfinder: SCHNEIDER, Hans-Peter, 70469, Stuttgart (DE); BOECKER, Juergen, 70176, Stuttgart (DE)

(56) Entgegenhaltungen:
- WO-A-01/89898
- DE-A- 10 107 215
- DE-A- 10 110 042
- DE-A- 10 118 903
- US-A- 5 754 123

## Beschreibung

Die Erfindung betrifft ein Fahrerassistenzverfahren und eine Fahrerassistenzvorrichtung für ein Kraftfahrzeug.

Zur Unterstützung des Fahrers sind verschiedene Fahrerassistenzsysteme bekannt. Adaptive Fahrgeschwindigkeitsregelungen (Adaptive Cruise Control, ACC) regeln die Geschwindigkeit des Fahrzeuges und den Abstand zu anderen fahrenden Fahrzeugen und werden beim Fahrbetrieb auf Autobahnen und gut strukturierten Landstraßen eingesetzt. Hierdurch wird ein Kolonnenfahren mit benachbarten Fahrzeugen ermöglicht, bei denen der Abstand und die Geschwindigkeit zu benachbarten Fahrzeugen ermittelt und die Fahrgeschwindigkeit des Fahrzeuges durch Bremseingriffe und Motorsteuereingriffe derjenigen des benachbarten Fahrzeugs angepasst wird, um bei dichtem Verkehr eine Entlastung des Fahrers zu ermöglichen. Hierbei wird im Allgemeinen mittels Radarsensoren, Lasersensoren oder Videosensoren ein Entfernungsbereich zwischen einigen Metern bis einigen 10 Metern vor dem Fahrzeug abgedeckt und z.B. aus einer Dopplermessung oder zeitlichen Ableitung des gemessenen Abstandswertes eine Relativgeschwindigkeit ermittelt. Neben den bekannteren Systemen, die in höheren Geschwindigkeitsbereichen arbeiten, sind weiterhin auch bei kleineren Geschwindigkeiten bis hin zum Stillstand wirksame adaptive Fahrgeschwindigkeitsregelungen, so genannte ACC Low Speed Following-Systeme (ACC LSF), bekannt, die grundsätzlich ein Folgefahren auch in stauähnlichen Situationen ermöglichen.

Als weiteres Fahrerassistenzsystem sind Einparkhilfen (EPH) bekannt, die den Fahrer im Allgemeinen akustisch oder optisch bei Einpark- bzw. Rangiervorgängen unterstützen. Hierbei sind ergänzend bereits Systeme bekannt, die das Fahrzeug eigenständig abbremsen, sobald es beim Rangiervorgang zu nahe an ein Objekt herangefahren wird. Einparkhilfen werden im Allgemeinen lediglich bei geringeren Geschwindigkeiten unterhalb einer Grenzgeschwindigkeit eingesetzt. Sie verwenden in der Regel separate Abstandssensoren auf Ultraschallbasis, die zur Erkennung eines großen räumlichen Bereichs einen großen Erfassungswinkel aufweisen. Hierdurch können sie auch sich außerhalb der Fahrzeugmittelachse befindende Objekte erfassen, mit denen das Fahrzeug bei den für Einparkvorgänge engen Kurven kollidieren kann. Die für die Detektion erforderlichen Entfernungsbereiche sind im Allgemeinen geringer als 2,5 m bei einer hohen Entfernungsauflösung von 10 cm und darunter und bei relativ langen Zeitspannen von mehreren 10 Millisekunden.

Die Verwendung sowohl einer selbsttätig aktivierbaren Einparkhilfe als auch einer auch bei geringen Geschwindigkeiten aktiven adaptiven Fahrgeschwindigkeitsregelung ergibt jedoch bei niedrigen Geschwindigkeiten einen Konflikt, welches der Systeme aktiv werden soll. Insbesondere bei Stop & Go-Situationen können Irritationen des Fahrers und gegebenenfalls widersprüchliche Steueranweisungen für die Aktuatoren der Bremsen und der Motorsteuerung auftreten. Daher werden Einparkhilfen im Allgemeinen nicht mit bis zum Fahrzeugstillstand aktiven ACC-Systemen verwendet.

Die DE 101 18 903 A1 beschreibt ein Mehrzweck-Fahrerassistenz-System für ein Kraftfahrzeug nach dem Oberbegriff der Ansprüche 1 und 4, bei dem eine Einparkhilfe-Betriebsart und eine Pre-crash-Betriebsart unter Verwendung eines Entfernungssensors vorgesehen sind. Um bei beiden Betriebsarten Einbußen an der Sicherheit zu vermeiden, ist die Steuereinheit des Systems in Abhängigkeit von der Fahrzeuggeschwindigkeit zwischen der Einparkhilfe-Betriebsart und der Pre-crash-Betriebsart umschaltbar. Hierdurch wird jedoch die Verwendung der Pre-crash-Betriebsart bei niedrigen Geschwindigkeiten verhindert, so dass diese auch z.B. nicht an einem schlecht einsehbaren Stauende aktiv sein kann, obwohl ein bald auftretender Auffahrunfall durch ein herannahendes schnelles Fahrzeuge erkannt werden könnte. Derartige, von der Fahrgeschwindigkeit abhängige Ausschlusskriterien ermöglichen somit eine eindeutige Lösung eines Konfliktfalls, führen jedoch in der Praxis zu in vielen Situationen zu unbefriedigenden Ergebnissen.

Das erfindungsgemäße Verfahren nach Anspruch 1 und die erfindungsgemäße Vorrichtung nach Anspruch 4 weisen gegenüber bekannten Systemen insbesondere den Vorteil auf, dass eine Einparkhilfe und eine adaptive Fahrgeschwindigkeitsregelung vorgesehen sind, die auch bei niedrigen Geschwindigkeiten zu keinem Konflikt führen. Somit kann erfindungsgemäß eine Einparksituation eindeutig von einer Stausituation unterschieden werden und eine verwirrende Ausgabe unnötiger Anzeigesignale und die Einstellung einer zu falschen Aktuatorbetätigungen führenden, nicht relevanten Betriebsart vermieden werden.

Weitere Vorteile liegen darin, dass ein hoher Grad an Automatisierung der Ein- und Ausschaltung der Einparkhilfe erreicht wird und zusätzliche Betätigungselemente für die Einparkhilfe zwar vorgesehen sein können, jedoch nicht erforderlich sind.

Der adaptiven Fahrgeschwindigkeitsregelung wird Vorrang vor der Einparkhilfe gegeben. Hierdurch wird überraschenderweise mit relativ geringem Aufwand eine sichere Verwendung der beiden Betriebsarten auch bei niedrigen Geschwindigkeiten unter zumindest weitgehender Vermeidung der eingangs geschilderten Nachteile erreicht. Die Vorrangsstellung kann auch in den Fällen ohne große Nachteile verwendet werden, bei denen sowohl das ACC als auch die Einparkhilfe aus technischer Sicht eingeschaltet sein können. Hierzu wird von einer Steuereinrichtung bzw. Funktionsgruppe der Fahrgeschwindigkeitsregelung ein den aktiven bzw. nicht aktiven Zustand der Fahrgeschwindigkeitsregelung anzeigendes Zustandssignal ausgegeben; grundsätzlich kann hierbei auch das Fehlen oder Vorliegen des Signals als nicht aktiver oder aktiver Zustand gewertet werden, so dass das Zustandssignal lediglich z.B. bei aktiver Geschwindigkeitsregelung ausgegeben wird.

Gemäß einer erfindungsgemäßen Ausbildung kann die Fahrgeschwindigkeitsregelung bei Erkennen einer entsprechenden Situation, z.B. dem Erkennen einer Kolonnenfahrt hinter einem Fahrzeug, auch selbsttätig gestartet werden und hierdurch die Einparkhilfe blockieren. Vorteilhafterweise wird die adaptive Fahrgeschwindigkeitsregelung jedoch bei Eingabe eines Schaltsignals durch den Fahrer über eine Mensch-Maschine-Schnittstelle (HMI) gestartet. Durch den Fahrerwunsch wird hierbei neben dem Start der Fahrgeschwindigkeitsregelung eine sichere Blockade der Einparkhilfe erreicht und gegebenenfalls eine bereits aktive Einparkhilfe-Betriebsart beendet.

Für die beiden Betriebsarten können zwei separate Steuereinrichtungen verwendet werden, die z.B. mit den jeweiligen Sensoren der Einparkhilfe und Fahrgeschwindigkeitsregelungen integriert sind und das Zusatzsignal z.B. über einen fahrzeuginternen Bus ausgeben. Alternativ hierzu kann die Erfindung auch softwaremäßig durch unterschiedliche Betriebsarten in einem Steuergerät verwirklicht werden.

Erfindungsgemäß kann eine durch den Fahrer aktivierbare oder eine bei niedrigen Geschwindigkeiten selbsttätig aktivierbaren Einparkhilfe vorgesehen sein.

Die Erfindung wird im Folgenden anhand der beiliegenden Zeichnungen an einigen Ausführungspunkten erläutert. Es zeigen:
- Fig. 1.: ein Blockschaltbild einer Vorrichtung gemäß einer ersten Ausführungsform;
- Fig. 2: ein Blockschaltbild einer weiteren Ausführungsform;
- Fig. 3: eine Straßenszene mit einem Fahrzeug;
- Fig. 4: ein Zeitdiagramm eines erfindungsgemäßen Verfahrens mit verschiedenen Zuständen der Einparkhilfe und Fahrgeschwindigkeitsregelung.

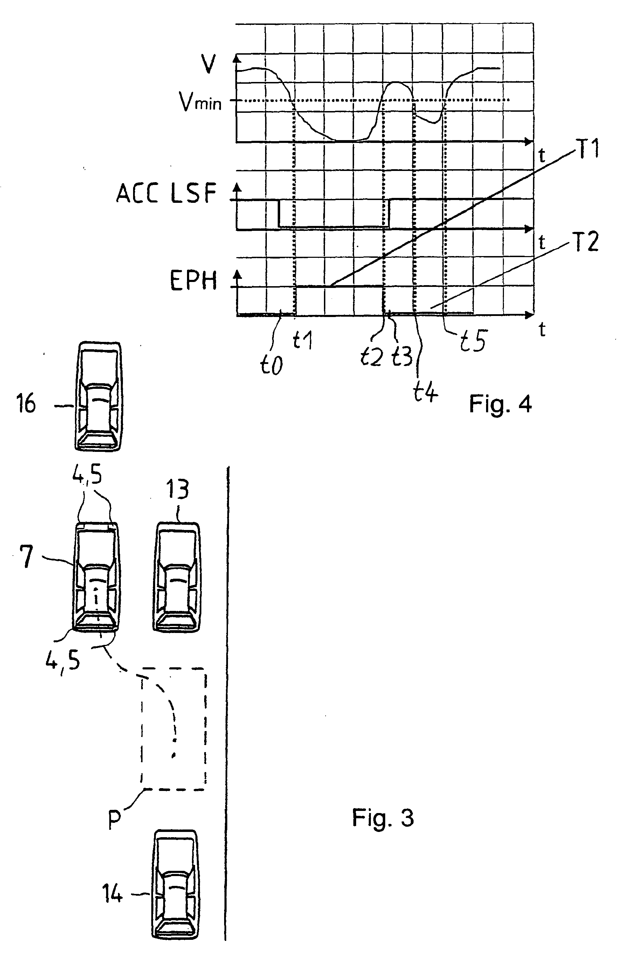

Eine Vorrichtung 1 weist eine EPH-Steuereinrichtung 2 für eine Einparkhilfe und eine ACC-Steuereinrichtung 3 für eine auch bei niedrigen Geschwindigkeiten wirksame adaptive Fahrgeschwindigkeitsregelung (ACC LSF) auf, wobei die EPH-Steuereinrichtung 2 Ultraschallmesssignale d1 von Ultraschallsensoren 4 und die ACC-Steuereinrichtung 3 Radarmesssignale d2 von Radarsensoren 5 erhält. Auch eine gemeinsame Nutzung der selben Sensoren 4, 5 ist möglich. Die Sensoren 4, 5 können in an sich bekannter Weise gemäß Fig. 3 im Front- und Heckbereich des Fahrzeuges 7, z.B. in den Stoßfängern integriert, vorgesehen sein. Die Ultraschallsensoren 4 sind hierbei in einem Distanzbereich von z.B. kleiner/gleich 2,5 Meter mit einer hohen örtlichen Auflösung von weniger als 10 cm aktiv und erlauben die Vermessung innerhalb eines relativ großen Messwinkels. Die Ultraschallsensoren 4 können grundsätzlich auch über größere Entfernungen verwendet werden, wobei allerdings durch Wind und Mehrfachreflexionen fehlerhafte Signale auftreten können. Die Radarmesssignale d2 werden von der ACC-Steuereinrichtung 3 bezüglich ihrer Laufzeit und gegebenenfalls Dopplerverschiebung ausgewertet und erlauben eine Vermessung innerhalb eines kleineren Messwinkels über große Entfernungen bis hin zu einigen 10 Metern. Beide Steuereinrichtungen 2, 3 nehmen Geschwindigkeitsmesssignale v von einer Geschwindigkeitsmesseinrichtung 6 auf, die in bekannter Weise z.B. aus einer Drehzahl einer Getriebeabtriebswelle oder als Referenzgeschwindigkeit eines Antibockiersystems oder einer Fahrdynamikregelung ermittelt werden.

Die EPH-Steuereinrichtung 2 vergleicht, ob die gemessene Geschwindigkeit v unterhalt einer Grenzgeschwindigkeit vmin liegt; falls dies der Fall ist, wird die Einparkhilfe-Betriebsart selbsttätig, d.h. ohne ein Startsignal vom Fahrer, aktiv und ermittelt aus den Abstandssignalen d1 einen möglichen Einparkvorgang. Daraufhin gibt sie gemäß einer erfindungsgemäßen Ausbildung Steuersignale s1, s2 an einen Aktuator 9 für einen Beschleunigungsvorgang sowie mindestens einen Bremsaktuator 12 für einen Bremseingriff bzw. Bremseingriffe an mehreren Fahrzeugrädern aus. Die Aktuatoren 9, 12 können hierbei auch separate Steuereinrichtungen aufweisen, die die Steuersignale s1, s2 aufnehmen und an jeweilige Stelleinrichtungen ausgeben. Weiterhin kann die Einparkhilfe 2 alternativ oder zusätzlich zu den Steuersignalen s1, s2 auch Anzeigesignale s3 an eine optische oder akustische Anzeigeeinrichtung 15 für den Fahrer ausgeben, die dem Fahrer Warnsignale ausgibt bei Unterschreiten eines Mindestabstandes zu Objekten 13 und 14, z.B. in Fig. 3 gezeigten parkenden Fahrzeugen 13, 14, die eine Parklücke P begrenzen.

Die ACC-Steuereinrichtung 3 wird bei Eingabe eines Schaltsignals b über eine Mensch-Maschine-Schnittstelle (human machine interface, HMI) 19, z.B. einen Schalter 19, aktiviert. Bei aktiver adaptiver Fahrgeschwindigkeitsregelung (adaptiver Abstands- und Geschwindigkeitsregelung, ACC LSF) nimmt die ACC-Steuereinrichtung 3 die Radarmesssignale d2 und das Geschwindigkeitssignal v auf und ermittelt einen Abstand d2 und eine Relativgeschwindkeit zu einem vorausfahrenden Fahrzeug 16. Zur Einstellung einer Kolonnenfahrt gibt die ACC-Steuereinrichtung 3 in an sich bekannter Weise Steuersignale S4 und S5 an Aktuatoren für eine Brems- und Motoreinstellung aus. Weiterhin gibt die ACC-Steuereinrichtung 3 ein Zustandssignal a an die EPH-Steuereinrichtung 2 aus, die eine aktive Einschalthilfe-Betriebsart beendet und für den Zeitraum der ACC-Regelung, d.h. solange das Zustandssignal a gesetzt ist, das Aktivieren der Einparkhilfe-Betriebsart verhindert.

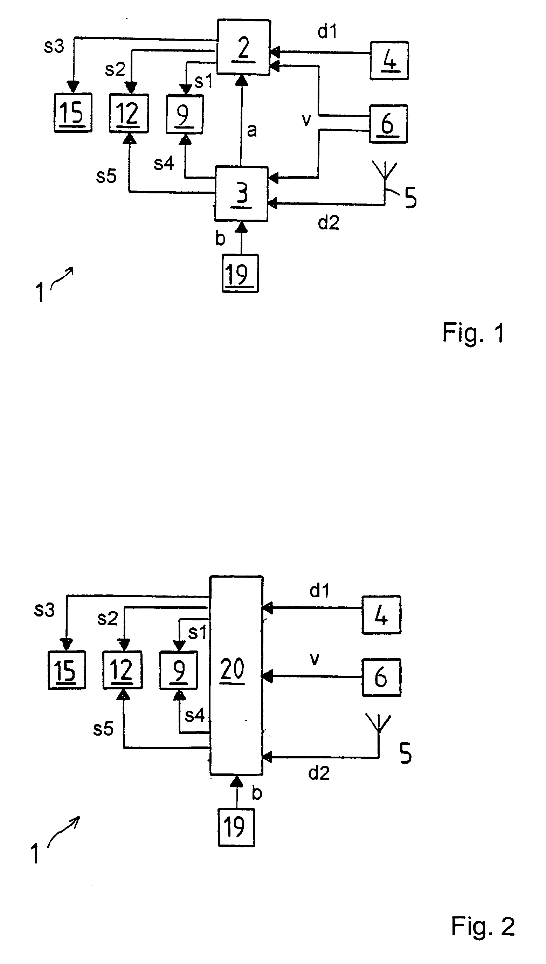

Bei der Ausführungsform der Fig. 2 sind die Steuereinrichtungen 2, 3 der ersten Ausführungsform in einer Steuereinrichtung 20 integriert. Hierdurch können vorteilhafterweise die Sensoreinrichtungen 4, 5 von sämtlichen Fahrassistenz-Funktionen, d.h. insbesondere auch der ACC LSF und der Einparkhilfe, genutzt werden, so dass ein Abgleich der Messwerte und ein großer Gesamtmessbereich und -winkel erricht wird. Die Steuereinrichtungen 2 und 3 der ersten Ausführungsform können hierbei räumlich nebeneinander in der Steuereinrichtung 20 integriert sein oder aber vorzugsweise als reine Software-Funktionen programmiert sein. Hierbei wird als Zustandssignal a z.B. ein Status für die Programmroutine der Einparkhilfe gesetzt.

Bei dem Zeitdiagramm der Fig. 4 liegt die Fahrgeschwindigkeit v bis zu einem Zeitpunkt t1 oberhalb der Mindestgeschwindigkeit vmin. Zu einem Zeitpunkt t0 wird hierbei das ACC LSF von dem Fahrer über die Mensch-Maschine-Schnittstelle 19 durch ein Schaltsignal b ausgeschaltet, so dass nachfolgend zu dem Zeitpunkt t1 die Einparkhilfe in den eingeschalteten Zustand übergeht. Zu einem Zeitpunkt t2 übersteigt die Fahrgeschwindigkeit v wiederum vmin, so dass die Einparkhilfe selbsttätig ausgeschaltet wird. Der Zeitraum T1 zwischen t1 und t2 gibt somit die wirksame Zeitdauer der EPH wieder. Zu einem Zeitpunkt t3 wird von dem Fahrer über ein Schaltsignal b das ACC LSF eingeschaltet, so dass das Zustandssignal a ausgegeben wird. Während einer nachfolgenden Zeitdauer T2 von einem Zeitpunkt t4 bis zu einem Zeitpunkt t5 unterschreitet die Fahrgeschwindigkeit v wiederum vmin, so dass grundsätzlich die Einparkhilfe-Betriebsart selbsttätig aktiviert werden könnte; da jedoch durch das Zustandssignal a die aktive ACC LSF angezeigt wird, bleibt die Einparkhilfe erfindungsgemäß während der Zeitdauer T2 aus. Ab einem Zeitpunkt t5, bei dem die Fahrgeschwindigkeit v wiederum vmin überschreitet, bleibt die Einparkhilfe weiterhin aus.

## Patentansprüche

1. Fahrerassistenzverfahren für ein Kraftfahrzeug, bei dem einstellbar ist eine Einparkhilfe-Betriebsart (EPH), die bei Unterschreiten einer Mindestgeschwindigkeit (vmin) aktivierbar ist und in der Abstände zu anderen Objekten (25, 27) ermittelt und Steuersignale (S 2) für mindestens einen Aktuator (12) des Fahrzeugs und/oder Anzeigesignale (S 3) ausgegeben werden, und eine adaptive Fahrgeschwindigkeitsregelungs-Betriebsart (ACC LSF), in der Abstände und Relativgeschwindigkeiten zu anderen fahrenden Fahrzeugen (25) ermittelt und Steuersignale (S1, S2) an Aktuatoren (9, 12) des Fahrzeuges ausgegeben werden, **dadurch gekennzeichnet, dass** in der Fahrgeschwindigkeitsregelungs-Betriebsart (ACC LSF) Abbremsvorgänge bis in einen Fahrzeugstillstand und Beschleunigungsvorgänge aus einem Fahrzeugstillstand heraus durchführbar sind, dass ein einen aktiven Zustand der adaptiven Fahrgeschwindigkeitsregelungs-Betriebsart (ACC LSF) anzeigendes Zustandssignal (a) für die Einparkhilfe-Betriebsart (EPH) dazu verwendet wird, bei Aufnahme des Zustandssignals (a) durch eine Einparkhilfe-Steuereinrichtung, eine inaktive Einparkhilfe-Betriebsart einzustellen und/oder ein Aktivieren der Einparkhilfe-Betriebsart zu verhindern.

2. Verfahren nach Anspruch 1, **dadurch gekennzeichnet, dass** die adaptive Fahrgeschwindigkeitsregelungs-Betriebsart durch ein über eine Mensch-Maschine-Schnittstelle (19) eingebbares Schaltsignal (b) aktiviert wird.

3. Verfahren nach einem der vorherigen Ansprüche, **dadurch gekennzeichnet, dass** die Einparkhilfe-Betriebsart bei Unterschreiten der Mindestgeschwindigkeit (vmin) selbsttätig aktiviert wird.

4. Fahrerassistenzvorrichtung für ein Kraftfahrzeug, mit mindestens einer Sensoreinrichtung (4, 5) zur Erfassung von Objekten (25, 26, 29), einer Geschwindigkeitsmesseinrichtung (6) zur Messung einer Fahrzeuggeschwindigkeit, Aktuatoren (9, 12) für eine Fahrzeugbeschleunigung und Bremsbetätigung, einer ersten Steuereinrichtung (2, 20) für eine Einparkhilfe-Betriebsart, die Messsignale (d1) von der Sensoreinrichtung (4) aufnimmt und Steuersignale (s2) an mindestens einen Aktuator und/oder Anzeigesignale (S 3) ausgibt, einer zweiten Steuereinrichtung (3, 20) für eine adaptive Fahrgeschwindigkeitsregelung, die Messsignale (d2) von der Sensoreinrichtung (5) und ein Geschwindigkeitssignal (v) von der Geschwindigkeitsmesseinrichtung (5) aufnimmt und Steuersignale (S 4, S 5) an die Aktuatoren (9, 12) ausgibt, wobei die Einparkhilfe-Betriebsart bei Unterschreiten einer Mindestgeschwindigkeit (vmin) aktivierbar ist, **dadurch gekennzeichnet, dass** die adaptive Fahrgeschwindigkeitsregelung bis zum Stillstand des Fahrzeuges und aus einem Stillstand des Fahrzeuges heraus durchführbar ist, dass die zweite Steuereinrichtung (3, 20) für die adaptive Fahrgeschwindigkeitsregelung ein Zustandssignal (a), das eine aktive Fahrgeschwindigkeitsregelungs-Betriebsart anzeigt, an die erste Steuereinrichtung (2, 20) ausgibt und dass die Einparkhilfe-Steuereinrichtung (2, 20) bei Aufnahme des Zustandssignals (a) eine inaktive Einparkhilfe-Betriebsart einstellt und/oder ein Aktivieren der Einparkhilfe-Betriebsart verhindert.

5. Vorrichtung nach Anspruch 4, **dadurch gekennzeichnet, dass** die Steuereinrichtungen (2, 3) getrennt ausgebildet und z.B. miteinander verbunden, z.B. über einen CAN-Bus verbunden, sind.

6. Vorrichtung nach Anspruch 4 oder 5, **dadurch gekennzeichnet, dass** die Steuereinrichtungen in einer gemeinsamen Fahrerassistenz-Steuereinrichtung (20) integriert sind.

7. Vorrichtung nach einem der Ansprüche 4 bis 6, **dadurch gekennzeichnet, dass** eine Mensch-Maschine-Schnittstelle (19), vorzugsweise eine manuelle Betätigungseinrichtung (19), zur Ausgabe eines Schaltsignals (b) an die Fahrgeschwindigkeitsregelungs-Steuereinrichtung (3, 20) vorgesehen ist.

8. Vorrichtung nach einem der Ansprüche 4 bis 7, **dadurch gekennzeichnet, dass** bei inaktiver adaptiver Fahrgeschwindigkeitsregelungs-Betriebsart und bei Unterschreiten der Mindestgeschwindigkeit (vmin) die erste Steuereinrichtung (2) die Einparkhilfe-Betriebsarbeit selbsttätig aktiviert.

## Claims

1. Driver assistance method for a motor vehicle, in which it is possible to set a parking aid operating mode (EPH) which can be activated when the velocity drops below a minimum value (vmin), and in which distances from other objects (25, 27) are determined and control signals (S 2) are output for at least one actuator (12) of the vehicle and/or display signals (S 3), and an adaptive cruise control operating mode (ACC LSF) in which distances and relative speeds are determined with respect to other travelling vehicles (25), and control signals (S1, S2) are output to actuators (9, 12) of the vehicle, **characterized in that** braking processes to a stationary state of the vehicle and acceleration processes from a stationary state of the vehicle can be carried out in the cruise control operating mode (ACC LSF), **in that** a state signal (a), which displays an active state of the adaptive cruise control operating mode (ACC LSF), for the parking aid operating mode (EPH), can be used for setting an inactive parking aid operating mode and/or activating the parking aid operating mode when the state signal (a) is received by a parking aid control device.

2. Method according to Claim 1, **characterized in that** the adaptive cruise control operating mode is activated by a switching signal (b) which can be input via a man/machine interface (19).

3. Method according to one of the preceding claims, **characterized in that** the parking aid operating mode is activated automatically when the velocity drops below the minimum value (vmin).

4. Driver assistance device for a motor vehicle, having at least one sensor device (4, 5) for sensing objects (25, 26, 29), a velocity measuring device (6) for measuring a vehicle velocity, actuators (9, 12) for a vehicle acceleration and brake activation, a first control device (2, 20) for a parking aid operating mode which records measurement signals (d1) from the sensor device (4) and output control signals (s2) to at least one actuator and/or display signals (S 3), a second control device (3, 20) for adaptive cruise control, which receives measurement signals (d2) from the sensor device (5) and a velocity signal (v) from the velocity measuring device (5) and outputs control signals (S 4, S 5) to the actuators (9, 12),
wherein the parking aid operating mode can be activated when the velocity drops below a minimum value (vmin), **characterized in that** the adaptive cruise control can be carried out up to the stationary state of the vehicle and from a stationary state of the vehicle, **in that** the second control device (3, 20) for the adaptive cruise control outputs a state signal (a), which displays an active cruise control operating mode, to the first control device (2, 20), and **in that** when the state signal (a) is received the parking aid control device (2, 20) sets an inactive parking aid operating mode and/or prevents activation of the parking aid operating mode.

5. Device according to Claim 4, **characterized in that** the control devices (2, 3) are of separate design and are, for example, connected to one another via, for example, an CAN bus.

6. Device according to Claim 4 or 5, **characterized in that** the control devices are integrated in a common driver assistance control device (20).

7. Device according to one of Claims 4 to 6, **characterized in that** a man/machine interface (19), preferably a manual activation device (19), is provided for outputting a switching signal (b) to the cruise control control device (3, 20).

8. Device according to one of Claims 4 to 7, **characterized in that** when the adaptive cruise control operating mode is inactive and when the velocity drops below the minimum value (vmin) the first control device (2) automatically activates the parking aid operating mode.

## Revendications

1. Procédé d'assistance du conducteur d'un véhicule automobile selon lequel on règle un mode de fonctionnement d'assistance aux manoeuvres de rangement (EPH) qui est activé lorsqu'on dépasse vers le bas, une vitesse minimale (vmin) et il détermine les distances par rapport aux autres objets (28, 27) et on émet des signaux de commande (S 2) pour au moins un actionneur (12) du véhicule et/ou des signaux d'affichage (S 3) et aussi
un mode de fonctionnement avec régulation adaptative de vitesse de déplacement, (ACC LSF) qui détermine les distances et les vitesses relatives par rapport aux autres véhicules en mouvement (25) et génère des signaux de commande (S1, S2) pour les actionneurs (9, 12) du véhicule,
**caractérisé en ce que**
dans le mode de fonctionnement avec régulation de vitesse de déplacement (ACC LSF), les manoeuvres de freinage jusqu'à l'arrêt du véhicule et les manoeuvres d'accélération à partir de l'arrêt du véhicule peuvent être effectuées de façon qu'un signal d'état (a) indiquant un état activé du mode de fonctionnement à régulation adaptative de vitesse de déplacement, (ACC LSF), soit utilisé pour le mode de fonctionnement d'assistance au rangement (EPH),
et lors de la réception du signal d'allumage (a) par une installation de commande d'assistance aux manoeuvres de rangement, on règle un mode de fonctionnement inactif pour l'assistance de rangement et/ou on active le mode de fonctionnement de l'assistance aux manoeuvres de rangement.

2. Procédé selon la revendication 1,
**caractérisé en ce que**
le mode de fonctionnement à régulation adaptative de la vitesse du véhicule est activé par un signal de commutation b) qui s'introduit par une interface homme-machine (19).

3. Procédé selon l'une des revendications précédentes,
**caractérisé en ce que**
le mode de fonctionnement avec assistance aux manoeuvres de rangement est activé automatiquement lorsqu'on passe en dessous de la vitesse minimale (vmin).

4. Dispositif d'assistance du conducteur d'un véhicule automobile comportant au moins une installation de capteur (4, 5) pour saisir des objets (25, 26, 29), une installation de vitesse (6) pour mesurer une vitesse du véhicule, des actionneurs (9, 12) pour une accélération du véhicule et un actionnement des freins, une première installation de commande (2, 20) pour le mode de fonctionnement d'assistance aux manoeuvres de rangement qui reçoit les signaux de mesure (d1) de l'installation de capteur (4) et fournit des signaux de commande (S 2) vers au moins un actionneur et/ou des signaux d'affichage (S 3), une seconde installation de commande (3, 20) pour une régulation adaptative de la vitesse de déplacement, qui reçoit les signaux de mesure (d2) de l'installation de capteur (5) et un signal de vitesse (v) de l'installation de mesure de vitesse (5) et fournit les signaux de commande (S 4, S 5) aux actionneurs (9, 12),
le mode de fonctionnement d'assistance aux manoeuvres de rangement étant activé lorsqu'on passe en dessous d'une vitesse minimale (vmin),
**caractérisé en ce que**
la régulation adaptative de la vitesse de déplacement est exécutée jusqu'à l'arrêt du véhicule et pour sortir de l'état d'arrêt du véhicule,
la seconde installation de commande (3, 20) indique à la régulation adaptative de vitesse de déplacement, un signal d'état (a) donnant le mode de fonctionnement de régulation active de la vitesse de déplacement à la première installation de commande (2, 20) et l'installation de commande d'assistance aux manoeuvres de rangement (2, 20), lors de la réception du signal d'état (a), règle un mode de fonctionnement neutralisé de l'assistance de la manoeuvre de rangement et/ou évite l'activation du mode de fonctionnement d'assistance aux manoeuvres de rangement.

5. Dispositif selon la revendication 4,
**caractérisé en ce que**
les installations de commande (2, 3) sont réalisées séparément et sont par exemple reliées par exemple par un bus CAN.

6. Dispositif selon la revendication 4 ou 5,
**caractérisé en ce que**
les installations de commande sont intégrées dans une installation de commande commune d'assistance au conducteur (20).

7. Dispositif selon l'une des revendications 4 à 6,
**caractérisé par**
une interface homme-machine (19), de préférence une installation d'actionnement à manivelle (19) pour émettre un signal de commutation (b) à destination de l'installation de commande de régulation de vitesse de déplacement (3, 20).

8. Dispositif selon l'une des revendications 4 à 7,
**caractérisé en ce qu'**
en cas de mode de fonctionnement avec neutralisation de la régulation adaptative de la vitesse de déplacement et en cas de dépassement vers le bas de la vitesse minimale (vmin), la première installation de commande (2) active automatiquement le mode de fonctionnement d'assistance aux manoeuvres de rangement.
